# DEMANDE DE BREVET EUROPEEN

(11) **EP 4 575 792 A1**
(43) Date de publication de la demande: **25.06.2025**
(21) Numéro de dépôt: 24218410.9
(22) Date de dépôt: 09.12.2024
(51) Int. Cl.: G06F 11/07

(54) **PROCEDE DE GESTION D'ERREURS DE BUS**

(30) Priorité: 22.12.2023 FR 2315216
(71) Demandeur: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(57) **Abrégé**

La présente description concerne un procédé de gestion d'erreurs de bus, dans lequel une ou plusieurs premières caractéristiques d'une première transaction d'écriture (410) à destination d'une unité fonctionnelle (116) et transitant par une passerelle (160,162,164,166,168), sont stockées, et dans lequel en présence d'une erreur de bus envoyée par l'unité fonctionnelle (116) :
- une ou plusieurs deuxièmes caractéristiques liées à ladite erreur sont stockées ;
- la passerelle (160,162,164,166,168) génère une première interruption (416,420,422,430) qu'elle transmet avec lesdites premières et deuxièmes caractéristiques à une unité de gestion (440) ; et
- l'unité de gestion (440) génère au moins une deuxième interruption (SBS_IRQ_NS,SBS_IRQ_SEC) à destination d'une unité de traitement (110,312,314) en fonction des premières et/ou deuxièmes caractéristiques.

## Description

### Domaine technique

La présente description concerne de façon générale les procédés de gestion d'erreurs de bus ainsi que les microcontrôleurs mettant en oeuvre ces procédés.

### Technique antérieure

De nombreux systèmes électroniques utilisent des unités de traitements (CPU, Central Processing Unit en anglais) générant des transactions d'accès en écriture à destination d'unités fonctionnelles (IP, Intellectual Property core en anglais). Des erreurs peuvent avoir lieu lors de la mise en oeuvre de ces transactions.

### Résumé de l'invention

Il existe un besoin d'améliorer l'identification des causes d'erreur suite à une transaction d'accès en écriture.

Un mode de réalisation pallie tout ou partie des inconvénients des procédés connus.

Un mode de réalisation prévoit un procédé de gestion d'erreurs de bus,
dans lequel une ou plusieurs premières caractéristiques d'une première transaction d'écriture à destination d'une unité fonctionnelle et transitant par une passerelle, sont stockées, et dans lequel en présence d'une erreur de bus envoyée par l'unité fonctionnelle :
- une ou plusieurs deuxièmes caractéristiques liées à ladite erreur sont stockées ;
- la passerelle génère une première interruption qu'elle transmet avec lesdites premières et deuxièmes caractéristiques à une unité de gestion ; et
- l'unité de gestion génère au moins une deuxième interruption à destination d'une unité de traitement en fonction des premières et/ou deuxièmes caractéristiques.

Un mode de réalisation prévoit un microcontrôleur comprenant au moins une unité de commande, une passerelle, une unité fonctionnelle, et une unité de gestion ; le microcontrôleur étant configuré pour :
- stocker une ou plusieurs premières caractéristiques d'une première transaction d'écriture à destination de l'unité fonctionnelle et transitant par la passerelle; et
- qu'en présence d'une erreur de bus envoyée par l'unité fonctionnelle :
   la passerelle génère une première interruption qu'elle transmet avec lesdites premières et deuxièmes caractéristiques à une unité de gestion ; et
   l'unité de gestion génère au moins une deuxième interruption à destination d'une unité de traitement en fonction des premières et/ou deuxièmes caractéristiques.

Selon un mode de réalisation, l'unité de traitement exécute plusieurs systèmes d'exploitation et la deuxième interruption est destinée à l'un de ces systèmes d'exploitation en fonction des premières et/ou deuxièmes caractéristiques.

Selon un mode de réalisation, la deuxième interruption est destinée à l'une parmi plusieurs unités de traitement en fonction des premières et/ou deuxièmes caractéristiques.

Selon un mode de réalisation, les premières caractéristiques sont stockées dans la passerelle.

Selon un mode de réalisation, les deuxièmes caractéristiques sont stockées dans la passerelle.

Selon un mode de réalisation, l'unité de gestion stocke les premières et deuxièmes caractéristiques.

Selon un mode de réalisation, l'unité de gestion stocke les premières et deuxièmes caractéristiques après la transmission de la première transaction d'interruption et des premières et deuxièmes caractéristiques par la passerelle.

Selon un mode de réalisation, les premières et deuxièmes caractéristiques sont stockées dans un ou des registres de l'unité de gestion.

Selon un mode de réalisation, la ou les premières caractéristiques comprennent un niveau de restriction d'accès.

Selon un mode de réalisation, la ou les deuxièmes caractéristiques comprennent un niveau de restriction de mode d'adressage.

Selon un mode de réalisation, la ou les deuxièmes caractéristiques comprennent une adresse.

Selon un mode de réalisation, la ou les deuxièmes caractéristiques comprennent un identifiant.

Selon un mode de réalisation, un des registres est configuré pour stocker une valeur représentative de la présence d'une transmission de la première transaction d'interruption.

Selon un mode de réalisation, un des registres est configuré pour stocker la ou les premières caractéristiques ainsi que la ou les deuxièmes caractéristiques.

Selon un mode de réalisation, un des registres est configuré pour stocker une adresse liée à la première transaction d'accès en écriture.

Selon un mode de réalisation, l'unité de gestion stocke la ou les premières et deuxièmes caractéristiques dans des registres ayant un niveau de restriction d'accès similaire à la ou les premières caractéristiques.

Selon un mode de réalisation, l'unité de gestion transmet ladite deuxième transaction d'interruption à l'unité de traitement ayant un niveau de restriction d'accès similaire au niveau de restriction d'accès associé à la ou les premières caractéristiques.

Selon un mode de réalisation, suite à la transmission de la deuxième transaction d'interruption, l'unité de traitement ayant reçu ladite deuxième transaction d'interruption effectue une action parmi une reconfiguration de l'unité fonctionnelle, une réinitialisation de la première ou de la deuxième transaction, une réinitialisation du microcontrôleur, et une écriture d'un compte-rendu d'erreur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de microcontrôleur du type auquel s'appliquent les modes de réalisation décrits ;
la figure 2 représente un exemple d'un procédé de gestion d'erreur de bus ;
la figure 3 représente un autre exemple d'un procédé de gestion d'erreur de bus;
la figure 4 représente un procédé de gestion d'erreur de bus selon un mode de réalisation ; et
la figure 5 représente un procédé de gestion d'erreur de bus selon un autre mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

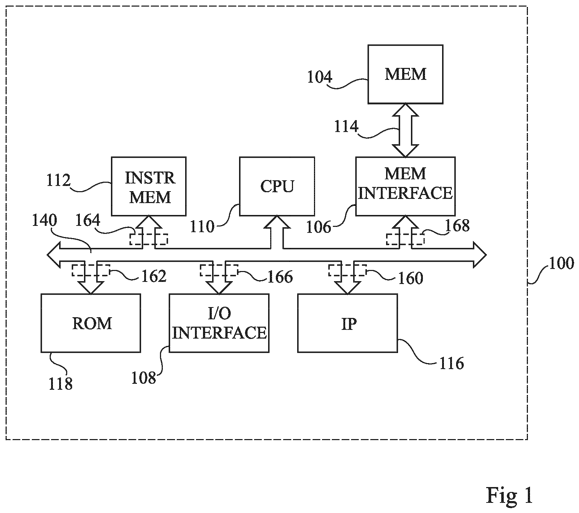

La figure 1 représente, de façon très schématique et sous forme de blocs, un exemple de microcontrôleur 100 du type auquel s'appliquent les modes de réalisation décrits. Le microcontrôleur 100 est par exemple un microprocesseur.

Le microcontrôleur 100 comprend une mémoire non-volatile 104 (NVM), par exemple de type à changement de phase, capable de communiquer, via un bus de communication 114, avec une interface de mémoire non-volatile 106 (NVM INTERFACE) configurée pour écrire ou lire des données dans et depuis la mémoire non-volatile 104.

Le microcontrôleur 100 comprend en outre, par exemple, une ou plusieurs unités de traitement 110 (CPU) comprenant un ou plusieurs processeurs sous contrôle d'instructions stockées dans une mémoire d'instructions 112 (INSTR MEM). La ou les unités de traitement 110 comprennent un ou plusieurs systèmes d'exploitation (OS).

La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande) . La mémoire 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le microcontrôleur 100 peut intégrer d'autres circuits mettant en œuvre d'autres fonctions ou unités fonctionnelles (par exemple, une ou plusieurs mémoires volatiles et/ou non-volatiles, des accès mémoire directs (DMA, Direct Access Memory en anglais) ou d'autres unités de traitement, symbolisées par un bloc 116 (IP) en figure 1. Parmi ces autres circuits, le microcontrôleur 100 comporte par exemple une mémoire morte ou statique 118 (ROM).

La ou les unités de traitement 110 ainsi que les blocs 104, 106, 108, 112, 114, 116, 118, sont par exemple utilisés dans des environnements ayant des niveaux de restriction d'accès (NS, SEC) différents. Dans un exemple les ressources évoluant dans l'environnement SEC ont accès aux ressources du niveau SEC ou NS tandis que les ressources évoluant dans l'environnement NS ont accès aux ressources du niveau NS mais pas du niveau SEC. Dans un exemple, une application définie pour avoir le niveau de restriction d'accès SEC, a plus de droit qu'une application ayant le niveau de restriction d'accès NS. Les niveaux de restriction d'accès SEC, NS sont par exemple mis en oeuvre avec le protocole TrustZone de l'architecture ARM^{®} CORTEX-M.

Dans certains cas, les différents blocs 104, 106, 108, 110, 112, 114, 116, 118, de la figure 1 fonctionnent avec différents domaines de signaux d'horloge ou sous différents protocoles tels que AXI, AHB ou APB de l'architecture ARM^{®}. Il est alors nécessaire de mettre en oeuvre une ou des passerelles 160, 162, 164, 166, 168 (bridge en anglais) par exemple entre la ou les unités de traitements 110 et le bloc 116, ou l'un des blocs 118, 112, 108, ou 106. Ces passerelles assurent le passage d'un mode de fonctionnement, par exemple un protocole de bus ou un domaine de fréquence d'horloge, vers un autre mode de fonctionnement.

La ou les unités de traitement 110 génèrent et envoient des transactions d'accès en écriture vers un ou plusieurs des différents blocs 104, 106, 108, 112, 114, 116, 118 à travers le bus 140 et par exemple en transitant à travers une des passerelles. Lors du passage par la passerelle, la transaction de demande d'accès en écriture (Write bufferable access en anglais) est par exemple stockée temporairement dans la passerelle respective. Dans un exemple, si l'accès en écriture n'aboutit pas, une erreur de bus est générée par exemple par le bloc destinataire de la transaction d'accès en écriture.

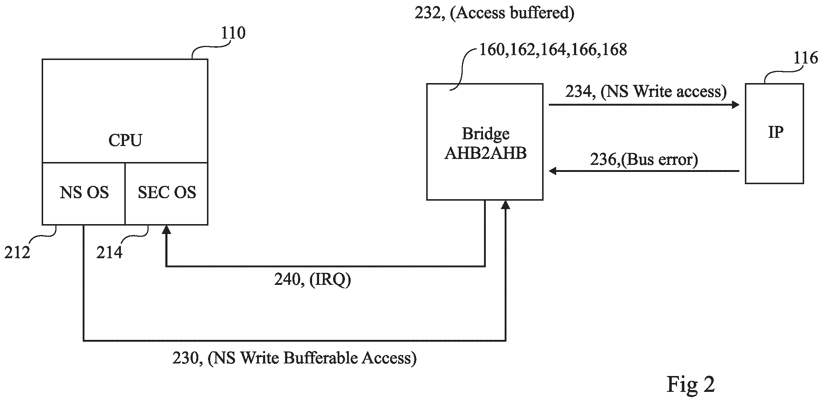

La figure 2 représente un exemple d'un procédé de gestion d'erreur de bus.

Dans l'exemple représenté, l'unité de traitement 110 comprend par exemple deux systèmes d'exploitation 214 (SEC OS) et 212 (NS OS). Le système d'exploitation SEC OS a un niveau de restriction de droits d'accès (secure, SEC) supérieur à celui du système d'exploitation NS OS (non secure, NS) .

Dans une première étape 230 (NS Write Bufferable Access), une transaction d'accès en écriture est générée par le système d'exploitation 212 à destination par exemple du bloc 116. Dans cet exemple, cette transaction est implémentée dans un environnement NS.

Dans une deuxième étape 232 (Access buffered), cette transaction transite par la passerelle (Bridge AHB2AHB) respective 160,162,164,166,168. Dans l'exemple représenté, la passerelle adapte la transaction qui est en protocole de bus AHB à un même protocole AHB ayant par exemple un domaine de signal d'horloge différent, par exemple de fréquence différente. Dans cette étape, la transaction est mise en tampon, c'est-à-dire stockée temporairement, par la passerelle. Après cette mise en tampon ou dès la fin de la première étape 230, l'unité de traitement 110 réalise par exemple d'autres tâches qui n'ont plus de lien avec la passerelle.

Dans une troisième étape 234 (NS Write access), la transaction est mise en oeuvre depuis la passerelle vers par exemple le bloc 116.

En réponse, dans une quatrième étape 236 (Bus error), si la transaction d'accès en écriture échoue, une erreur de bus est envoyée depuis le bloc 116 vers la passerelle 160.

Dans une cinquième étape 240 (IRQ), à réception de cette erreur, la passerelle génère, autrement dit lève, une interruption (IRQ, Interrupt ReQuest en anglais) à destination du système d'exploitation 214 SEC OS par défaut et non pas à destination du système d'exploitation ayant l'environnement NS de la transaction initiale. Cela est par exemple dû au fait que l'erreur de bus peut être due à une attaque et que par défaut les interruptions sont dirigées vers le système d'exploitation 214. Cette interruption peut être logicielle ou matérielle. L'interruption se matérialise par exemple par le changement d'un bit ou d'un octet d'un registre. Le système d'exploitation NS OS, initiateur de la transaction initiale, ne reçoit pas l'erreur de bus et ne peut ainsi pas mettre en oeuvre d'action réparatrice ou d'action ciblée. Le fait que l'unité de traitement 110 ait, suite à la transaction de demande d'accès en écriture, réalisé d'autres tâches qui n'ont plus de lien avec la passerelle 160, implique qu'aucun des systèmes d'exploitation 214 SEC OS ou 212 NS OS ne recevra l'erreur de bus. Le système d'exploitation 214 SEC OS n'ayant pas d'informations autre que l'interruption levée par la passerelle, ce qui pourrait correspondre à une attaque, il mettra en oeuvre par exemple une réinitialisation complète du microcontrôleur 100 ce qui est dommageable pour l'expérience utilisateur par exemple.

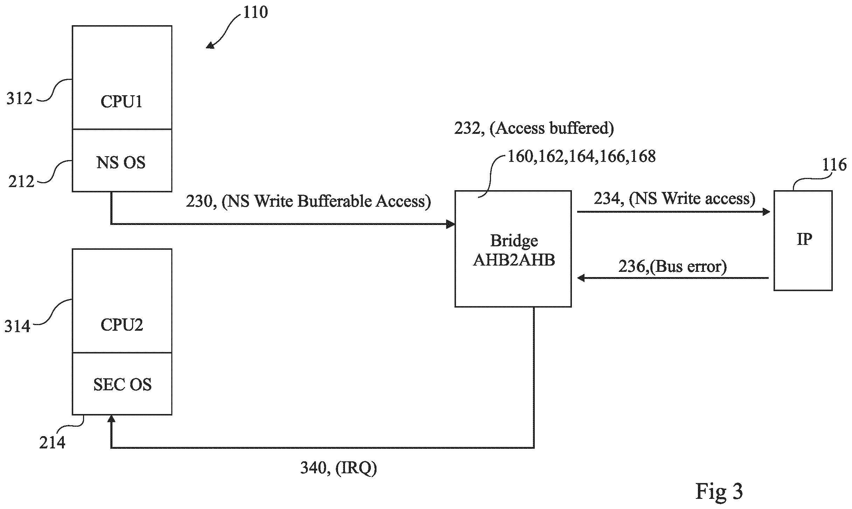

La figure 3 représente un autre exemple d'un procédé de gestion d'erreur de bus. L'exemple de la figure 3 est similaire à celui de la figure sauf qu'au lieu d'avoir une unité de traitement mettant en oeuvre deux systèmes d'exploitation sous environnements différents, le microcontrôleur 100 comprend deux unités de traitement 312 (CPU1) et 314 (CPU2) qui mettent en oeuvre respectivement le système d'exploitation 212 et le système d'exploitation 214. Dans un exemple, l'unité de traitement 110 comprend deux régions contenant respectivement les unités de traitement 312 et 314.

Dans l'exemple illustré, la transaction d'accès d'écriture de l'étape 230 est générée par le système d'exploitation 212 sous environnement NS. Les étapes 232, 234 et 236 sont ensuite similaires à celles de l'exemple de la figure 2.

Après l'étape 236, dans une étape 340 (IRQ), à réception de l'erreur de bus, la passerelle 160 génère par défaut une interruption (IRQ) à destination du système d'exploitation 214 SEC OS de l'unité de traitement 314 et non pas à destination du système d'exploitation 212 NS qui pourtant a le même environnement NS que celui de la transaction initiale.

De plus, le système d'exploitation 212 NS OS, initiateur de la transaction initiale, ne reçoit pas l'erreur de bus et ne peut ainsi pas mettre en oeuvre d'action réparatrice ou d'action ciblée. Pour les mêmes raisons que l'exemple de la figure 2, aucuns des systèmes d'exploitation 214 SEC OS ou 212 NS OS ne recevra l'erreur de bus. Le système d'exploitation 214 SEC OS n'ayant pas d'informations autre que l'interruption levée par la passerelle, il mettra en oeuvre par exemple une réinitialisation complète du microcontrôleur 100.

Pour pallier à ces inconvénients, les modes de réalisation décrits prévoient un procédé de gestion d'erreurs de bus, dans lequel une ou plusieurs premières caractéristiques d'une première transaction d'écriture (write bufferable access) à destination de l'unité fonctionnelle 116 et transitant par la passerelle 160, sont stockées,
et dans lequel en présence d'une erreur de bus envoyée par l'unité fonctionnelle 116 :
- une ou plusieurs deuxièmes caractéristiques liées à ladite erreur sont stockées ;
- la passerelle génère une première interruption qu'elle transmet avec lesdites premières et deuxièmes caractéristiques à une unité de gestion ; et
- l'unité de gestion génère au moins une deuxième interruption à destination de l'unité de traitement (110, 312, 314) en fonction des premières et/ou deuxièmes caractéristiques.

Le système d'exploitation initiateur de la transaction initiale peut ainsi avoir accès à des informations relatives à l'erreur de bus et peut ainsi mettre en oeuvre des actions réparatrices ou des actions ciblées sans avoir à réinitialiser complètement le microcontrôleur.

Le fait de stocker les premières et deuxièmes caractéristiques permet de pouvoir constituer un compte rendu d'erreur pour l'implémentation de certifications telles que la certification SESIP (Security Evaluation Standard for IoT Platforms en anglais).

Le système d'exploitation ayant émis la transaction d'accès en écriture initiale, qu'il soit de niveau de restriction d'accès NS ou SEC, pourra recevoir la deuxième interruption liée à cette transaction.

Enfin, un avantage d'un tel procédé est qu'il est possible de conserver les passerelles existantes sans devoir en développer de nouvelles.

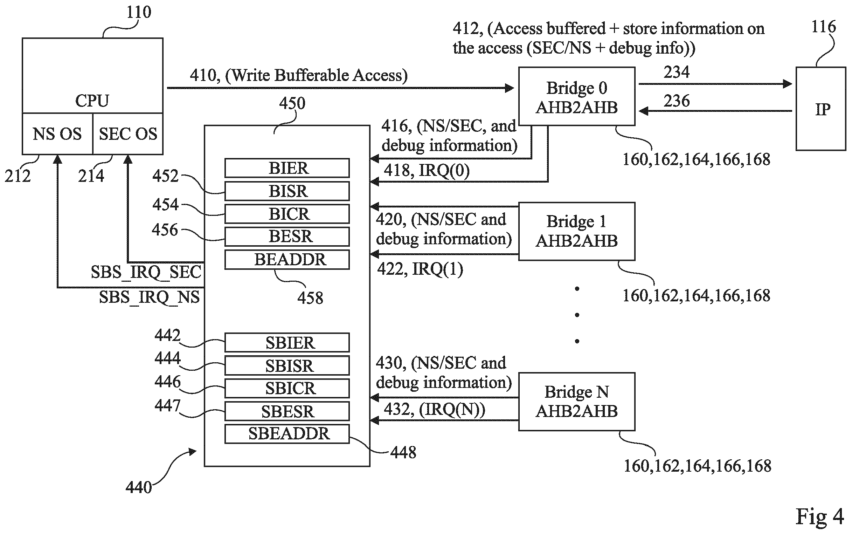

La figure 4 représente un procédé de gestion d'erreur de bus selon un mode de réalisation. L'unité de traitement 110 de la figure 4 est similaire à celle de la figure 2.

Dans une première étape 410 (NS Write Bufferable Access), une transaction d'accès en écriture est générée par le système d'exploitation 212 à destination par exemple du bloc 116. Dans cet exemple, cette transaction est implémentée dans un environnement NS. Dans l'exemple représenté, N transactions d'accès en écriture sont générées, par exemple successivement, par le système d'exploitation 212 à destination par exemple du bloc 116 ou d'autres blocs et en transitant de façon respective à chaque transaction d'accès en écriture par N passerelles (Bridge 0 AHB2AHB, Bridge 1 AHB2AHB,..., Bridge N AHB2AHB) .

Dans une deuxième étape 412 (Access buffered+ store information on the access (SEC/NS + debug info)), cette transaction transite par une passerelle (Bridge 0 AHB2AHB) respective 160, 162, 164, 166, 168. Dans l'exemple représenté, la passerelle adapte la transaction qui est en protocole de bus AHB à un même protocole AHB ayant par exemple un domaine de signal d'horloge différent, par exemple de fréquence différente. Dans cette étape, la transaction est mise en tampon, c'est-à-dire stockée temporairement, par la passerelle. Après cette mise en tampon ou dès la fin de la première étape 410, l'unité de traitement 110 réalise par exemple d'autres tâches qui n'ont plus de lien avec la passerelle. Lors de cette étape, une ou plusieurs premières caractéristiques de la transaction d'écriture, autrement dit d'accès en écriture, sont stockées, par exemple dans la passerelle. Ces premières caractéristiques sont par exemple représentatives du niveau de restriction d'accès (NS/SEC) lié à l'environnement de la transaction. Les premières caractéristiques peuvent également comprendre des informations utiles pour la résolution d'erreur (debug en anglais).

Dans une troisième étape similaire à l'étape 234, la transaction d'accès en écriture est mise en oeuvre depuis la passerelle respective vers par exemple le bloc 116.

En réponse, dans une quatrième étape similaire à l'étape 236 (Bus error), si la transaction d'accès en écriture échoue, une erreur de bus accompagnée éventuellement d'une ou plusieurs deuxièmes caractéristiques est envoyée depuis le bloc 116 vers la passerelle respective. Dans cette étape, une ou plusieurs deuxièmes caractéristiques liées à cette erreur sont stockées par exemple dans la passerelle respective. Ces deuxièmes caractéristiques comprennent par exemple un niveau de restriction de mode d'adressage (unpriv, Priv), une adresse ou encore un identifiant de fonctions maîtres ou esclaves.

Dans une cinquième étape 416, 420, 430 (NS/SEC, and debug information), après réception de l'erreur de bus respective, chaque passerelle génère une interruption 418 IRQ(0), 422 IRQ(1)... 432 IRQ (N) qu'elle transmet, par exemple avec les premières et deuxièmes caractéristiques, à une unité de gestion 440. L'unité de gestion 440 est par exemple un système de passerelle intelligente (SBS, Smart Bridge System en anglais).

Dans l'exemple représenté, l'unité de gestion comprend des registres 450 (BIER), 452 (BISR), 454 (BICR), 456 (BESR) et 458 (BEADDR) dédiés au stockage des caractéristiques parmi les premières et les deuxièmes qui font suite à une transaction d'accès en écriture de niveau de restriction d'accès NS et des registres différents 442 (SBIER), 444 (SBISR), 446 (SBICR), 447 (SBESR) et 448 (SBEADDR) dédiés au stockage des caractéristiques qui font suite à une transaction d'accès en écriture de niveau de restriction d'accès SEC. Autrement dit, si le niveau de restriction d'accès NS/SEC du système d'exploitation, ou l'environnement, qui a généré la transaction dans l'étape 410 est de type NS alors les premières et deuxièmes caractéristiques transmises par la passerelle respective sont stockées dans l'unité de gestion 440 dans les registres associés à ce même niveau NS de restriction d'accès, et de même pour le niveau SEC.

Dans une sixième étape postérieure à la cinquième étape, l'unité de gestion 440 génère au moins une deuxième interruption (SBS_IRQ_NS,SBS_IRQ_SEC) à destination de l'unité de traitement 110 en fonction des premières et/ou deuxièmes caractéristiques stockées dans une ou plusieurs des passerelles et/ou dans l'unité de gestion 440.

Si l'interruption, générée par une des passerelles et stockée par exemple par l'intermédiaire d'un drapeau levé dans un des registres de l'unité de gestion 440, est liée initialement à une transaction ayant un niveau de restriction d'accès NS alors la deuxième interruption SBS_IRQ_NS est envoyée depuis l'unité de gestion 440 vers le système d'exploitation 212. Si l'interruption, est liée initialement à une transaction ayant un niveau de restriction d'accès SEC alors la deuxième interruption SBS_IRQ_SEC est envoyée depuis l'unité de gestion 440 vers le système d'exploitation 214.

Cette deuxième interruption peut contenir par exemple le niveau de restriction d'accès NS/SEC de la transaction initiale mais également les deuxièmes caractéristiques liées à l'erreur de bus correspondante.

Le registre 450 est par exemple à accès de lecture et écriture seul dans le cas où le niveau de restriction d'accès est NS. Dans un exemple, certains bits ou octets du registre 450 sont écrits par voie logicielle pour activer ou désactiver la deuxième interruption SBS_IRQ_NS. Une valeur 0 signifie que cette deuxième interruption SBS_IRQ_NS est désactivée et que, dans ce cas, la deuxième interruption ne remontera pas au niveau de l'unité de traitement concernée lorsqu'une première interruption aura été initiée par une passerelle. Une valeur à 1 signifie que la deuxième interruption SBS_IRQ_NS est active et dans ce cas l'interruption remontera au niveau de l'unité de traitement concernée lorsqu'une interruption aura été initié par une passerelle.

Le registre 452 est par exemple à accès de lecture seul dans le cas où le niveau de restriction d'accès est de type NS. Dans un exemple, un bit ou octet du registre 452 est dédié au stockage du drapeau lié à la levée de la deuxième interruption SBS_IRQ_NS. Une valeur à 1 indique par exemple que l'interruption SBS_IRQ_NS est remontée à l'unité de traitement concernée. Une valeur du drapeau à 0 indique par exemple que l'interruption SBS_IRQ_NS n'est pas remontée à l'unité de traitement concernée.

Le registre 454 est par exemple à accès d'écriture seul dans le cas où le niveau de restriction d'accès est NS. Dans un exemple, une valeur à 1 efface le drapeau lié à l'interruption stocké dans le registre 452 et efface également les registres 456 et 458. Dans un exemple, écrire 0 n'a pas d'effet.

Le registre 456 est par exemple à accès de lecture seul dans le cas où le niveau de restriction d'accès est NS. Il stocke les caractéristiques associées à la transaction en demande d'accès en écriture de restriction d'accès NS. Ce registre est par exemple valide seulement lorsque la passerelle respective a généré une interruption associée à la restriction d'accès NS, c'est-à-dire lorsqu'un drapeau (flag en anglais) est levé. Dans un exemple, certains bits ou octets du registre 456 sont dédiés au stockage de l'identifiant de la passerelle ayant transmis l'interruption. Certains bits ou octets du registre 456 sont par exemple dédiés au stockage du niveau de restriction de mode d'adressage (unpriv, Priv) de l'unité fonctionnelle ou de la passerelle ou du système d'exploitation ayant émis la transaction. Certains bits ou octets du registre 456 sont par exemple dédiés au stockage de l'identifiant de l'élément maître/esclave ou de l'unité fonctionnelle.

Le registre 458 est par exemple à accès de lecture seul dans le cas où le niveau de restriction d'accès est NS. Ce registre 458 est par exemple écrit par voie matérielle lorsqu'une passerelle lève une erreur. Il est par exemple réinitialisé par voie logicielle par l'intermédiaire du registre 454. Il stocke par exemple l'adresse de la transaction de demande d'accès en écriture ayant le niveau de restriction d'accès NS qui a généré l'erreur de bus.

Les registres 442, 444, 446, 447, et 448 sont similaires respectivement aux registres 450, 452, 454, 456 et 458 sauf que les critères des paramètres de niveau de restriction d'accès NS sont remplacés par le niveau de restriction d'accès SEC.

L'unité de traitement ou le système d'exploitation recevant la deuxième interruption pourra par exemple se servir des premières et deuxièmes caractéristiques stockées dans la passerelle correspondante ou dans les registres de l'unité de gestion 440 ou dans les deuxièmes interruptions pour alimenter un compte rendu d'erreur et/ou mettre en oeuvre des actions spécifiques. Ces actions sont par exemple la reconfiguration du bloc fonctionnel 116 ayant généré l'erreur de bus ou relancer la transaction initiale ou encore réinitialiser tout ou partie du microcontrôleur.

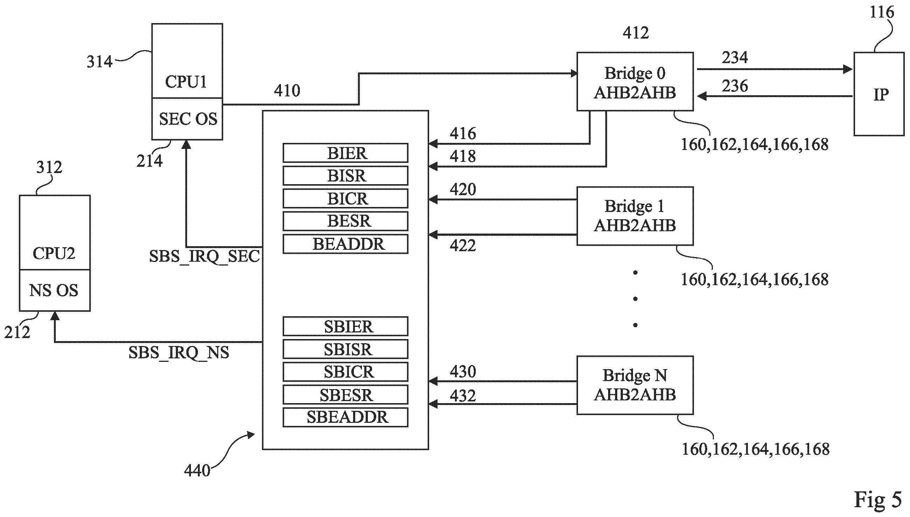

La figure 5 représente un procédé de gestion d'erreur de bus selon un autre mode de réalisation.

Le procédé de la figure 5 est similaire à celui de la figure 4 sauf que, dans l'étape 410 de la figure 5, la transaction d'accès en écriture est émise par un système d'exploitation similaire au système d'exploitation 214 qui est de niveau de restriction d'accès SEC ou un système d'exploitation similaire au système d'exploitation 212 qui est de niveau de restriction d'accès NS.

Dans la sixième étape, la deuxième interruption générée par l'unité de gestion 440 (SBS_IRQ_NS,SBS_IRQ_SEC) est, soit à destination du système d'exploitation 212 de l'unité de traitement 312, soit à destination du système d'exploitation 214 de l'unité de traitement 314 en fonction des premières et/ou deuxièmes caractéristiques stockées dans une ou plusieurs des passerelles et/ou dans l'unité de gestion 440.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, d'autres types de registres peuvent être implémentés dans l'unité de gestion 440 pour stocker d'autres types de caractéristiques qui pourraient aider à la résolution de problèmes liées aux erreurs de bus.

Enfin, la mise en oeuvre pratique des modes de réalisation et variantes décrits est à la portée de la personne du métier à partir des indications fonctionnelles données ci-dessus. En particulier, pour ce qui est du niveau de restriction d'accès NS/SEC, la personne du métier pourra mettre en oeuvre le stockage dans la ou les passerelles ou dans l'unité de gestion 440 d'autres caractéristiques telles qu'un niveau de restriction d'adressage priv/unpriv du système d'exploitation ayant émis la transaction initiale. Dans un exemple, la ou les passerelles pourront être intégrées à l'unité de gestion de sorte à faciliter le stockage et la transmission des caractéristiques des transactions d'accès en écriture mais également des caractéristiques liées aux erreurs de bus.

## Revendications

1. Procédé de gestion d'erreurs de bus,
dans lequel une ou plusieurs premières caractéristiques d'une première transaction d'écriture (410) à destination d'une unité fonctionnelle (116) et transitant par une passerelle (160,162,164,166,168), sont stockées,
et dans lequel en présence d'une erreur de bus envoyée par l'unité fonctionnelle (116) :
- une ou plusieurs deuxièmes caractéristiques liées à ladite erreur sont stockées ;
- la passerelle (160,162,164,166,168) génère une première interruption (416,420,422,430) qu'elle transmet avec lesdites premières et deuxièmes caractéristiques à une unité de gestion (440) ; et
- l'unité de gestion (440) génère au moins une deuxième interruption (SBS_IRQ_NS,SBS_IRQ_SEC) à destination d'une unité de traitement (110,312,314) en fonction des premières et/ou deuxièmes caractéristiques.

2. Microcontrôleur (100) comprenant au moins une unité de commande (110,312,314), une passerelle (160,162,164,166,168), une unité fonctionnelle (116), et une unité de gestion (440) ; le microcontrôleur (100) étant configuré pour :
- stocker une ou plusieurs premières caractéristiques d'une première transaction d'écriture (410) à destination de l'unité fonctionnelle (116) et transitant par la passerelle (160,162,164,166,168); et
- qu'en présence d'une erreur de bus envoyée par l'unité fonctionnelle (116) :
la passerelle génère une première interruption (416,420,422,430) qu'elle transmet avec lesdites premières et deuxièmes caractéristiques à une unité de gestion (440) ; et
l'unité de gestion génère au moins une deuxième interruption (SBS_IRQ_NS,SBS_IRQ_SEC) à destination d'une unité de traitement (110,312,314) en fonction des premières et/ou deuxièmes caractéristiques.

3. Procédé selon la revendication 1 ou microcontrôleur selon la revendication 2, dans lequel l'unité de traitement exécute plusieurs systèmes d'exploitation (212,214) et la deuxième interruption est destinée à l'un de ces systèmes d'exploitation en fonction des premières et/ou deuxièmes caractéristiques.

4. Procédé selon la revendication 1 ou microcontrôleur selon la revendication 2, dans lequel la deuxième interruption est destinée à l'une parmi plusieurs unités de traitement (312,314) en fonction des premières et/ou deuxièmes caractéristiques.

5. Procédé selon l'une quelconque des revendications 1, ou 3 ou 4, ou microcontrôleur selon l'une quelconque des revendications 2 à 4, dans lequel les premières caractéristiques sont stockées dans la passerelle (160,162,164,166,168).

6. Procédé selon l'une quelconque des revendications 1, 3 à 5, ou microcontrôleur selon l'une quelconque des revendications 2 à 5, dans lequel les deuxièmes caractéristiques sont stockées dans la passerelle (160,162,164,166,168).

7. Procédé selon l'une quelconque des revendications 1, 3 à 6, ou microcontrôleur selon l'une quelconque des revendications 2 à 6, dans lequel l'unité de gestion (440) stocke les premières et deuxièmes caractéristiques.

8. Procédé ou microcontrôleur selon la revendication 7, dans lequel l'unité de gestion (440) stocke les premières et deuxièmes caractéristiques après la transmission de la première transaction d'interruption (416,420,422,430) et des premières et deuxièmes caractéristiques par la passerelle.

9. Procédé ou microcontrôleur selon la revendication 7 ou 8, dans lequel les premières et deuxièmes caractéristiques sont stockées dans un ou des registres de l'unité de gestion (440) .

10. Procédé selon l'une quelconque des revendications 1, 3 à 9, ou microcontrôleur selon l'une quelconque des revendications 2 à 9, dans lequel la ou les premières caractéristiques comprennent un niveau de restriction d'accès (NS, SEC).

11. Procédé selon l'une quelconque des revendications 1, 3 à 10, ou microcontrôleur selon l'une quelconque des revendications 2 à 10, dans lequel la ou les deuxièmes caractéristiques comprennent un niveau de restriction de mode d'adressage (unpriv, Priv).

12. Procédé selon l'une quelconque des revendications 1, 3 à 11, ou microcontrôleur selon l'une quelconque des revendications 2 à 11, dans lequel la ou les deuxièmes caractéristiques comprennent une adresse.

13. Procédé selon l'une quelconque des revendications 1, 3 à 12, ou microcontrôleur selon l'une quelconque des revendications 2 à 12, dans lequel la ou les deuxièmes caractéristiques comprennent un identifiant.

14. Procédé ou microcontrôleur selon l'une quelconque des revendications 9 ou 10 à 13 dans leur dépendance à la revendication 9, dans lequel un des registres est configuré pour stocker une valeur représentative de la présence d'une transmission de la première transaction d'interruption (416,420,422,430).

15. Procédé ou microcontrôleur selon l'une quelconque des revendications 9 ou 10 à 14 dans leur dépendance à la revendication 9, dans lequel un des registres est configuré pour stocker la ou les premières caractéristiques ainsi que la ou les deuxièmes caractéristiques.

16. Procédé ou microcontrôleur selon l'une quelconque des revendications 9 ou 10 à 15 dans leur dépendance à la revendication 9, dans lequel un des registres est configuré pour stocker une adresse liée à la première transaction en écriture (410).

17. Procédé ou microcontrôleur selon l'une quelconque des revendications 10 à 16 dans leur dépendance à la revendication 9, dans lequel l'unité de gestion (440) stocke la ou les premières et deuxièmes caractéristiques dans des registres ayant un niveau de restriction d'accès (NS, SEC) similaire à la ou les premières caractéristiques.

18. Procédé ou microcontrôleur selon l'une quelconque des revendications 10 à 17 dans leur dépendance à la revendication 9, dans lequel l'unité de gestion (440) transmet ladite deuxième transaction d'interruption (SBS_IRQ_NS,SBS_IRQ_SEC) à l'unité de traitement (110, 312, 314) ayant un niveau de restriction d'accès (NS, SEC) similaire au niveau de restriction d'accès (NS, SEC) associé à la ou les premières caractéristiques.

19. Procédé selon l'une quelconque des revendications 1 ou 3 à 18, ou microcontrôleur selon l'une quelconque des revendications 2 à 18, dans lequel, suite à la transmission de la deuxième transaction d'interruption (SBS_IRQ_NS,SBS_IRQ_SEC), l'unité de traitement (110,312,314) ayant reçu ladite deuxième transaction d'interruption effectue une action parmi une reconfiguration de l'unité fonctionnelle (116), une réinitialisation de la première ou de la deuxième transaction, une réinitialisation du microcontrôleur (100), et une écriture d'un compte-rendu d'erreur.
